# EUROPEAN PATENT APPLICATION

(11) **EP 4 197 664 A1**
(43) Date of publication of application: **21.06.2023**
(21) Application number: 22212255.8
(22) Date of filing: 08.12.2022
(51) Int. Cl.: B21D 5/08

(54) **ROOF RAIL FOR A VEHICLE**

(30) Priority: 14.12.2021 DK PA202170615
(71) Applicant: Cisma Solutions ApS, 8600 Silkeborg (DK)
(72) Inventor: SASS-PETERSEN, Martin, 8600 Silkeborg (DK); LAURSEN, Søren Kroun, 6040 Egtved (DK)
(74) Representative: Zacco Denmark A/S

(57) **Abstract**

The present invention relates to a roof rail comprising: an elongated rail profile made of a first sheet material comprising a plurality of bends,
wherein the first sheet material provides a cover part for providing an outermost surface of the roof rail during use, and a mounting part for mounting the rail profile to the vehicle, wherein the mounting part is positioned between sides of the cover part, wherein a first flange wall of the rail profile is provided by a first edge portion of the cover part and a first proximal portion of the mounting part, which are connected, so that an inner surface of the first proximal portion is arranged at a first angle from an inner surface of the first edge portion of the cover part,
wherein a second flange wall of the rail profile is provided by a second edge portion of the cover part, arranged opposite the first edge portion, and a second proximal portion of the mounting part, which are connected, so that an inner surface of the second proximal portion is arranged at a second angle from the an inner surface of the second side portion of the cover part,
wherein the first flange wall or the second flange wall or both is/are folded flange wall(s), wherein the folded flange wall is provided by one or bends in the first sheet material arranged between a proximal portion and an edge portion, and
wherein the mounting part further comprises one or more distal portion(s) configured to provide contact surface(s) for mounting the rail profile to the roof of the vehicle, wherein the distal portion(s) are attached to the proximal portions and arranged at a mounting distance of at least 1 mm, such as at least 2 mm, preferably at least 3 mm above a first plane comprising lowermost parts of the first and second flange walls.

## Description

The invention relates to a roof rail for being mounting on a roof of a vehicle, such as an automobile.

### BACKGROUND

The present invention relate to the field of automobile parts, in particular to roof rails (or roof racks or roof carriers) to be installed on a roof of an automobile vehicle. The roof rails are generally elongated with their longitudinal axis arranged along a line extending from the front of the vehicle to the back of vehicle, and further the vehicle typically comprises two roof rails, one along each side thereof.

Typically the roof rails are hollow extruded profiles, which are often made from aluminium. Extruding other materials than aluminium, such as steel, is generally more difficult. Furthermore, intricate design features and thin walled sections are hard to produce by the extrusion method, since these sections can be prone to deformation. This in turn can compromise the properties, functionality and aesthetic appearance of the roof rail.

It is an object of the present invention to provide a rail profile for a roof rail with the aim of reducing material use, while maintaining sufficient rail profile strength and good functionality. It is a further object to provide a rail profile, which is of high aesthetic appearance.

### BRIEF DESCRIPTION OF THE INVENTION

The first aspect of the invention relates to a roof rail for a roof of a vehicle, comprising:
an elongated rail profile made of a first sheet material comprising a plurality of bends,
wherein the first sheet material provides a cover part for providing an outermost surface of the roof rail during use, and a mounting part for mounting the rail profile to the vehicle, wherein the mounting part is positioned between sides of the cover part,
wherein a first flange wall of the rail profile is provided by a first edge portion of the cover part and a first proximal portion of the mounting part, which are connected, so that an inner surface of the first proximal portion is arranged at a first angle from an inner surface of the first edge portion of the cover part,
wherein a second flange wall of the rail profile is provided by a second edge portion of the cover part, arranged opposite the first edge portion, and a second proximal portion of the mounting part, which are connected, so that an inner surface of the second proximal portion is arranged at a second angle from the an inner surface of the second side portion of the cover part,
wherein the first flange wall or the second flange wall or both is/are folded flange wall(s), wherein the folded flange wall is provided by one or bends in the first sheet material arranged between a proximal portion and an edge portion, and
wherein the mounting part further comprises one or more distal portion(s) configured to provide contact surface(s) for mounting the rail profile to the roof of the vehicle, wherein the distal portion(s) are attached to the proximal portions and arranged at a mounting distance of at least 1 mm, such as at least 2 mm, preferably at least 3 mm above a first plane comprising lowermost parts of the first and second flange walls.

By providing a plurality of bends in a sheet material, the elongated rail profile may be readily shaped to a desired design. Furthermore, the type and design of the bends may prove to provide additional functionality or strength to sections of the roof rail, which can e.g. compensate for thin sheet thickness and prove advantageous in acquiring a rail profile of high durability and strength.

Advantageously, the folded flange wall potentially increases the strength of the roof rail along an edge portion thereof, which is beneficial in reliably securing loads to the roof rail, such as cross-bars etc. Moreover, during mounting of the rail profile, mounting parts may advantageously arranged to be forced towards the vehicle roof, potentially further increasing the angle of the folded wall by biasing the proximal portion, which in turn can force portions of the cover part inwards towards an interior space and provide an advantageous pre-stressing of the rail profile, thereby increasing the functionality and durability of the roof rail.

Additionally, the folded flange wall and the distal portion can provide a mounting space of a width and height between outer surfaces of the mounting part, which can accommodate elongated mounting strips, which during mounting may be sandwiched between the mounting part and the vehicle with the purpose of providing an interface between the vehicle and the roof rail, and optionally further to provide a seal and to protect the vehicle roof surface etc. The mounting part is preferably arranged so that the mounting strip is pressed against the mounting part, and in particular the distal portion(s) when the rail profile is mounted. The flange wall(s) are preferably separated from the roof vehicle, and preferably does not directly touch the roof vehicle, after the installation of the roof rail, e.g. an air gap may be provided between the flange walls and the roof of the vehicle. Thereby an aesthetically pleasing result is provided without potentially damaging the vehicle roof by clamping the flange walls against it.

In one or more embodiments, the mounting strip, or one or more further separate mounting strip(s), may extend between the roof of the vehicle and the flange walls. E.g. that mounting strip may extend in between mounting flange and the opposing part of the vehicle roof, preferably at both longitudinal sides of the roof rail. In one or more embodiments, the mounting strip may be wider than the width of the rail profile and for example extend from the outer surface of the cover part at the first side, below both flange walls and terminate at the outer surface of the cover part at the second side. The mounting strip may thereby fill the gap between the flange walls and the roof of the vehicle. The mounting strip may be designed to be thinner below the flange walls and thicker below the mounting part, alternatively the mounting strip may be of substantially uniform thickness, and may be paired with a mounting strip extending between the flange walls, e.g. as previously described.

In one or more embodiments, the rail profile is preferably mounted with a mounting strip, e.g. a cushioning/sealing element or the like, configured so that the flange walls are arranged with a distance less than 1 mm, such as less than 0.8 mm, or such as less than 0.5 mm after mounting on the roof vehicle. E.g. the mounting strip may be of a specific rigidity, flexibility, density and/or height.

In one or more embodiments, the mounting strip may be configured to provide a spacer between the rail profile and the vehicle, but may additionally be configured to provide dust-protection, sealing properties etc. In one or more embodiments, the mounting strip is made of a plastic material, such as rubber. The mounting strip may be flexible and comprising an un-biased height of below 6 mm, such as below 5 mm, or below 4 mm. alternatively, the mounting strip may be rigid.

In one or more embodiments, the mounting distance (H1) is between 0.5 mm and 6 mm, such as between 0.8 mm and 5.5 mm, such as between 1 mm and 5 mm, such as between 1.5 mm and 4.5 mm, or such as between 2 mm and 4 mm or such as between 2.5 mm and 3.5 mm. In one or more embodiments, the distance (H1) is at least 0.5 mm, such as at least 0.6 mm, such as at least 0.7 mm, such as at least 0.8 mm, such as at least 0.9 mm, such as at least 1.0 mm, such as at least 1.1 mm, such as at least 1.2 mm, such as at least 1.3 mm, such as at least 1.4 mm or such as at least 1.5 mm measured along the smallest distance between the distal portion(s) and a first plane (P1) comprising the lowermost parts of the flange walls. Advantageously, this provides enough space for proper mounting of the roof rail onto the vehicle roof. In one or more embodiments, the mounting distance (H1) is measured prior to fastening the roof rail onto a vehicle.

In one or more embodiments, the roof rail may comprise said mounting strip. The rail profile may additionally or alternatively also comprise fastening means for fastening the roof rail on the vehicle. The fastening means may be screws, bolts or any other fastening element suitable for secure fastening of the roof rail e.g. through holes in the vehicle roof. Advantageously to the customer, the roof rail may be delivered with the fastening means already attached, so that the customer can easily attach the roof rail to the vehicle.

In one or more embodiments, the inner surface of the proximal portions and the inner surface of the edge portions and/or the inner surface of the distal portion(s) is the surface facing an interior space enclosed by the cover part and the mounting part.

In one or more embodiments, the first angle and/or the second angle is/are a sharp angle.

In one or more embodiments, the first angle is a sharp angle while the second angle is an obtuse angle, such as between 90-150° or such as between 100-140° or between 110-130°. The first angle may be between 0-60°, such as between 20-50° or such as between 30-45°.

In one or more embodiments, the first angle may be less than 90°, such as less than 80°, such as less than 70°, such as less than 60°, such as less than 50°, such as less than 40°, such as less than 30°, such as less than 20° or such as less than 10°. In one or more embodiments, the first angle may be equal to or above 0°, such as between 0-10°.

In one or more embodiments, the second angle may be less than 90°, such as less than 80°, such as less than 70°, such as less than 60°, such as less than 50°, such as less than 40°, such as less than 30°, such as less than 20° or such as less than 10°. In one or more embodiments, the second angle may be equal to or above 0°, e.g. between 0-10°. The angles are stated as positive values independent on whether the angle is measured from the proximal portion to the edge portion or from the edge portion to the proximal portion i.e. clockwise or anti-clockwise direction. The first and second angles are measured when the rail profile is in a non-biased, un-mounted condition. In one or more embodiments, 0° means that the edge portion is arranged parallel with the neighbouring first proximal portion.

In one or more embodiments, the proximal portion is arranged to extend upwards from the lowermost part of the flange wall (at the first plane), wherein upwards is generally towards the top side of the cover part. Optionally the proximal portion is further arranged to extend towards the opposite edge portion, e.g. into the cavity covered by the cover part. Advantageously, this provides a mounting height H1 between the first plane and the distal portion(s). In one or more embodiments, the proximal portion(s) extends from the first plane towards the inner surface of the cover part and away from the first plane.

In one or more embodiments, the mounting part is contiguous with the cover part, e.g. at both sides of the cover part or at one side of the cover part. The contiguous property is generally understood to be provided by providing the cover part and the mounting part in the same sheet material, preferably separated by a bend. Advantageously, the contiguous connection can reduce the occurrence of weak points in the structure.

In one or more embodiments, a first bend in the first sheet material is provided between the first edge portion and the first proximal portion, e.g. the first flange wall comprises said first bend providing the first angle. In one or more embodiments, a second bend in the first sheet material is provided between the second edge portion and the second proximal portion, e.g. the second flange wall comprises said second bend providing the second angle. In one or more embodiment, the rail profile comprises both said first bend and said second bend.

Advantageously, the contiguously arranged portions separated by a bend in the sheet material of the rail profile can add a certain degree of resiliency, which has the useful effect of potentially pre-stressing the profile without the need for adding more or stronger material.

Additionally, the resiliency at bends of the rail profile, provides a rail profile, which may restore its equilibrium state after demounting whereby the rail profile can be reused. Additionally, the bend(s) can potentially distribute energy provided by impact forces on the rail profile in a less damaging way compared to more straight connections, so as to provide a more durable rail profile.

In one or more embodiments, the distal portion(s) are configured to provide a connection between the rail profile and the vehicle, and may be of a suitable transverse cross-sectional shape and orientation suitable for this purpose. The distal portion may be configured to provide contact surface(s) to ensure proper engagement with a fastening means and/or a base profile. E.g. the distal portion(s) may comprise one or more inward directed protrusions. Advantageously, the distal portions eases the process of proper attachment between the roof rail and the vehicle. The distal portion may be provided with one or more bends, which e.g. may increase the strength of the distal portion.

In one or more embodiments, the dominant direction/orientation of the distal portion(s) is angled from the first plane by less than 15 degrees, such as less than 10 degrees or such as less than 5 degrees. E.g. the orientation may be substantially arranged in parallel with the first plane. The orientation may thereby provide a suitable contact surface for attachment to the vehicle roof.

In one or more embodiments, the orientation of the edge portions in a transverse cross-section of the rail profile are angled with respect to the first plane. Advantageously, this provides an aesthetically pleasing rail profile and may further increase the functionality of the rail profile. The edge portions may optionally be orientated substantially along the same direction from the lowermost parts of the flange walls.

In one or more embodiments, the first angle may be less than the second angle, such as at least 10 degrees, or such as at least 15 degrees less than the second angle, or such as at least 20 degrees less than the second angle, or vice versa. This may advantageously provide a tilted rail profile, in which the edge portions are angled relative to the first plane and which provides a dominant orientation of the general extent of the distal portion(s) being angled at 0-20 degrees relative to the first plane, such as substantially parallel to the first plane, e.g. substantially horizontal orientation. A tilted rail profile, when viewed in a transverse cross-section thereof, may provide the advantages of increase functionality in terms of receiving and holding elements on to the rail profile e.g. a cross-bar with attachment arrangements engaging the rail profile on each side thereof. Additionally, the tilted cross-section may additionally provide advantages in terms of aesthetic appearance and/or aerodynamic properties. In one or more embodiments, the rail profiles are mounted on the vehicle, so that they are tilted towards each other.

In one or more embodiments, the one or more distal portion(s) comprises a first distal portion contiguous with the first proximal portion at a first end of the first distal portion.

In one or more embodiments, the roof rail comprises a single first distal portion being contiguous with the first or second proximal portion and extending towards and opposite proximal portion. In one or more embodiments, the first distal portion may also fixed to the opposite proximal portion, e.g. by a suitable connecting method, such as by welding or gluing. The embodiment may provide a transverse cross-section of the rail profile, which is fully enclosed. It is understood that mounting apertures may be provided, e.g. in or through the distal portion, for attaching the roof rail to a vehicle. Advantageously, the fully enclosed rail profile provides for added structural strength of the rail profile itself, and further seals the interior space of the rail profile.

In one or more embodiments, the one or more distal portion(s) further comprises a second distal portion contiguous with the second proximal portion at the first end of the second distal portion.

In one or more embodiments, the first ends of the distal portions are fixed to the proximal portions at a second end of the proximal portion being opposite to a first end of the proximal portion being fixed to the edge portion.

In one or more embodiments, the rail profile may be arranged with two distal portions at each folded flange wall, which distal portions may or may not be connected at second ends of the distal portions, the second end being opposite the first end of the distal portion.

In one or more embodiments, a first distal portion extends towards a first side of the cover part, and/or a second distal portion extends towards a second side of the cover part, wherein the first side of the cover part comprises the first edge portion and the second side of the cover part comprises the second edge portion. In one or more embodiments, the distal portion(s) are arranged so that it extends towards the oppositely arranged edge portion of the cover part. This may provide suitable contact surfaces for engaging the rail profile at both sides thereof.

In one or more embodiments, the distal portions, such as the second ends of the distal portions, may be spaced apart by a bottom opening width (W2) so as to create and bottom opening separating the interior space of the rail profile and the outside environment of the rail profile. The bottom opening may be defined along the smallest gap between the distal portions. A bottom opening may be advantageous for allowing an easier access to the interior of the cavity, e.g. during mounting of the rail profile by fastenings means or so as to introduce structural support in the cavity if needed etc.

In one or more embodiments, the first and second distal portions may be similar in shape and arranged in mirrored configuration generally about the centre of the bottom side of the rail profile, e.g. through a vertical plane extending through the centre of a bottom opening and/or through a connection provided between the distal portions.

In one or more embodiments, the first proximal portion is contiguous with the first edge portion and/or wherein the second proximal portion is contiguous with the second edge portion.

In one or more embodiments, the first proximal portion may be contiguous with both the first distal portion and the first edge portion and/or the second proximal portion may be contiguous with both the second distal portion and the second edge portion. The contiguously connected folded flange wall(s) provides increased homogeneity of the roof rail, and may further provide increased resiliency at the first and second angles, which may potentially increase the durability of the rail profile as described previously.

In one or more embodiments, the first proximal portion is connected to the first edge portion by a jointed connection, e.g. glued or welded connection and/or wherein the second proximal portion is connected to the second edge portion by a joined connection, e.g. glued or welded connection.

In one or more embodiments, the rail profile may be joined, such as welded or glued, at the interface between one or more neighbouring/abutting proximal portions and the edge portions, at one or more folded flanges of the rail profile, e.g. at the bottom of the folded flange wall and/or along abutting parts of the proximal portion and edge portion.

In one or more embodiments, the rail profile provides a fully enclosed interior space, e.g. provided by a joined connection.

Advantageously, this can increase the structural strength of the rail profile and make it more resistant to deformation. Furthermore, it can provide a seal of the interior of the roof rail.

The fully enclosed space is provided in the transverse cross-section of the elongated rail profile and may be provided by a suitable joining method, preferably by a welded connection, e.g. comprising a weld line, which may be extending along the longitudinal extent of the rail profile.

In one or more embodiments, the first distal portion is fixed to the second proximal portion, e.g. by a suitable joining method, e.g. providing a welded or a glued joint, at a second end of the first distal portion, and/or the second distal portion is fixed to the first proximal portion, e.g. by a connection, e.g. welded or glued joint, at a second end of the second distal portion.

In one or more embodiments, the second ends of the distal portions may be fixed by a suitable joint, e.g. welded or glued joint, preferably extending along the majority of the longitudinal extent of the rail profile.

In one or more embodiments, the first edge portion may be fixed to the first proximal portion and/or the second edge portion may be fixed to the second proximal portion.

In one or more embodiments, the glued joint may be an UV adhesive which cured by being irradiated by UV-light.

In one or more embodiments, the folded flange is an open folded flange comprising an intermediate portion, which at a first end thereof is connected to an edge portion and at a second end thereof is connected to proximal portion, such that an intermediate distance is provided between the edge portion and the proximal portion.

By providing an intermediate portion, the width of the mounting space may be controlled and be dependent on the intermediate distance. The intermediate portions may provide increasing sealing capabilities between the mounting space and the environment outside the roof rail.

In one or more embodiments, the folded flange is an open folded flange comprising an intermediate portion, which at a first end thereof is connected to an edge portion via a first intermediate bend and at a second end thereof is connected to proximal portion, via a second intermediate bend, such that an intermediate distance is provided between the edge portion and the proximal portion.

Advantageously, by providing an intermediate portion, the risk of damaging the appearance of the outer surface of the cover part is decreased as some methods of bending the sheet material may produce dents in the cover part. By allowing an intermediate distance (D1) in the folded flange, dent in the cover part may potentially be completely avoided. Additionally, by providing an intermediate portion and separating the first/second bend into two intermediate bends, the material at the bends are stretched to a smaller degree.

In one or more embodiments, the intermediate distance (D1) may be between 0.3-6 mm, such as between 0.4-5 mm, such as between 0.5-4 mm, or such as less than 0.5 mm, less than 1 mm, less than 2 mm, less than 3 mm, less than 4 mm, less than 5 mm or less than 6 mm. The intermediate distance may be the smallest distance provided between the inner side of the edge portion and the inner side of the proximal portion, e.g. along an inner surface of the intermediate part.

In one or more embodiments, the proximal portion and/or the edge portion and/or the distal portion and/or the intermediate portion may be curved, however, preferably, at least the majority of the proximal portion and/or the edge portion and/or the distal portion and/or the intermediate portion may be substantially straight/planar. In one or more embodiments, the inner surface of the intermediate portion is the surface facing an interior space enclosed by the cover part and the mounting part.

In one or more embodiments, the rail profile comprises only one jointed connection, e.g. welded connection, such as a weld line, positioned either in a folded flange wall, e.g. in a proximal portion, or in a distal portion or any other portions of the mounting flange, such as an intermediate portion. Preferably, there is no joints, e.g. weld line(s) in the cover part. For purposes such as decreasing the efforts needed to manufacture the rail profile, the present rail profile may only need a maximum of one joint, e.g. weld line, to create the product, as the sheet material is provided with bends forming the rail profile from a single material sheet. This further ensures sufficient homogeneity of the material properties, such as strength in rail profile. Advantageously, the joint may additionally be hidden by the present invention, further making it easier provide an aesthetically pleasing rail profile.

In one or more embodiments, the folded flange wall is a flush folded flange wall having the inner surface of the proximal portion arranged substantially in parallel with the inner surface of the edge portion.

Advantageously, the flush folded flange wall may provide increased strength and support of the wall, due to a double layer of sheet material arranged side by side.

The flush folded flange wall may further maximise the width of the space provided between the folded flange walls, which may be utilize for fastening elements, mounting strips or other elements during mounting of the roof rail.

In one or more embodiments, the proximal portion is arranged substantially in parallel with the edge portion at least along a distance from the lowermost part of the flange wall.

In one or more embodiments, the proximal portion may be substantially parallel with the edge portion, and they may additionally be arranged so that they are abutting.

In one or more embodiments, the mounting part comprises a third bend arranged at an interface between a proximal portion and a distal portion. The third bend may advantageously direct the first sheet material further into the interior space covered by the cover part e.g. between the cover part and the first plane, so that the material creates a contact surface to be gripped and retained during mounting of the roof rail.

In one or more embodiments, the third bend may be provided so that the dominant orientation of the distal portion extents majorly horizontal, when the roof rail is arranged on the vehicle. Advantageously, this provides a suitable contact surface for engaging with fastening means upon instalment of roof rail. The distal portion may be of a non-planar transverse cross-sectional shape, in which case, the dominant orientation of the distal portion may be provided by a line comprising the two connection points between the distal portion(s) and the proximal portions, e.g. a first and second end of a distal portion extending from the first proximal portion to the second proximal portion. In one or more embodiments, the third bends may be provided in a second plane being parallel to the first plane. Majorly horizontal is generally understood as meaning more horizontal, e.g. parallel with the nearby roof of the vehicle, than vertical.

In one or more embodiments, the mounting part comprises a third bend arranged at an interface between a proximal portion and a distal portion, and wherein the third bend is provided at a third angle being an obtuse angle measured between the inner surface of the proximal portion and an inner surface of the distal portion.

Advantageously, this may allow for suitable orientation of the distal portion in order to ensure a good contact surface for mounting the roof rail to the vehicle, e.g. by providing a generally orientation of the distal portion being majorly horizontal. In one or more embodiments, the obtuse angle is provided so that the first sheet material is transferred from an orientation being substantially angled with respect to the first plane to being majorly parallel to the first plane, e.g. based on the dominant orientation of the distal portion(s). The angle provided may generally be calculated based on the orientation of the proximal portion to which the distal portion is connected. In one or more embodiments, the obtuse angle is between 180° and 360°, such as between 190° and 350°, such as between 210° and 320°, such as between 230° and 300° or such as between 205° and 280°. Alternatively, the third angle may be a sharp angle, such as between 10 and 80°, such as between 25° and 65° or such as between 40° and 50°. E.g. the adjacent first/second angle in the first sheet material may be between 30° and 65° and the third angle may be a sharp angle, such that the first distal portion and/or second distal portion is extending from the third bend towards the first side of the cover part and/or second side pf the cover part, respectively.

The angles are stated as positive values independent on whether the angle is measured from the proximal portion to the distal portion or from the distal portion to the proximal portion i.e. clockwise or anti-clockwise direction. The third angles are measured when the rail profile is in a non-biased, un-mounted condition.

In one or more embodiments, the third bend is provided between the first proximal portion and the first distal portion and/or the second proximal portion and the second distal portion. The value for the third angle may be the same of different between the first distal portion and the first proximal portion compared to the second distal portion and the second proximal portion.

In one or more embodiments, the roof rail further comprises a base profile made of a second sheet material, and wherein the base profile is arranged to extend across a bottom opening extending between distal portions of the mounting part. Alternatively, the bottom opening may extent between a distal portion and a proximal portion.

In one or more embodiments, the roof rail further comprises a base profile made of a second sheet material, and wherein the base profile is arranged to extend across at least a part of the first and second distal portions and across a bottom opening extending from the first distal portion to the second distal portion.

In one or more embodiments, the base profile comprises one or mounting apertures for mounting the base profile to the vehicle. The base profile may be provided as an addition to the mounting part for mounting the roof rail onto the vehicle.

In one or more embodiments, the base profile of a longitudinal extent being at least 50%, such at least 75%, or such as at least 85% of the longitudinal extent of the elongated rail profile. The base profile may have a longitudinal centre point coinciding with longitudinal centre point of the rail profile. The base profile may be arranged approximately symmetrically about the centre point of the elongated rail profile.

In one or more embodiments, the mounting part, e.g. the distal portion comprises one or more further bends, such as a fourth, fifth, sixth, seventh, eighth, ninth and/or tenth bend or more. The further bends may be arranged to add structural strength to the distal portion, to support the cover part and/or to increase the engagement and support for the fastening means and/or base profile. The further bends may be arranged to provide one or more inward protrusions protruding towards the interior space of the rail profile.

In one or more embodiments, the first sheet material and/or the second sheet material is a material of uniform sheet thickness, measured between opposite major surfaces of the sheet material. The sheet material(s) may preferably be of much larger width and length than the thickness thereof. The sheet material(s) may be a homogenous sheet material between surfaces thereof.

In one or more embodiments, the first sheet material is made of metal, such as steel, preferably stainless steel, for example a chromium-nickel stainless steel material.

In one or more embodiments, the second sheet material is made of metal, such as steel, preferably stainless steel, for example a chromium-nickel stainless steel material. In one or more embodiments, the first sheet material and the second sheet material may be made of the same, similar or different materials. E.g. the first sheet material may be made of stainless steel, while the second sheet material may be made of aluminium or thermoplastic material.

In one or more embodiments, the metal material may be aluminium or an alloy. Steel material may provide some advantages as compared to e.g. aluminium, as the steel material may be harder and may allow for a more cost efficient solution. Furthermore, the surface of steel is typically easy to make aesthetically pleasing, e.g. by polishing, coating etc. Stainless steel material, such as chromium-nickel stainless steel material provides increased corrosion resistance. Stainless steel is more corrosion resistant and thus, when applying a coating layer such as chrome plating, painting or the like on the rail profile to reach the desired visual end result, the rail profile with the coating may be more wear and/or weather resistant over time and the coating may be longer lasting.

In one or more embodiments of the present disclosure, the steel material comprises at least 12% by weight of chrome (Cr). Such steel material may be especially corrosion resistant. In one or more embodiments of the present disclosure the steel material may be a SUS 304 (Japanese Industrial Standards (JIN)) grade steel or a SUS 304L grade 20 steel. In embodiments, the steel may be a DIN EN-2-X5CrNi18-10 steel.

In one or more embodiments, the rail profile may need less or almost no subsequent treatment of the outer surface of the cover part in order to provide the desired design and surface smoothness. In one or more embodiments, the cover part may be provided with a removable protective sheet, such as foil, so as to protect the outer surface thereof during transport/mounting of the roof rail.

In one or more embodiments, the first sheet material is made of a thermoplastic sheet material, such a thermoplastic composite sheet material, e.g. a fibre reinforced thermoplastic composite material.

Thermoplastic composite material provides some advantages in being a lightweight alternative to metal, which additionally offers excellent formability, corrosion resistance, durability and strength. The thermoplastic material may further provide reduced investment cost e.g. compared to steel and higher recyclability.

Thermoplastics, or thermosoft plastics, are generally plastic polymer materials that become moldable/bendable at certain elevated temperatures and solidifies upon cooling. A composite is generally a material produced from two or more constituent materials. In one or more embodiments, the thermoplastic composite comprises a polymer material and a fibre reinforcement, such as synthetic and/or natural fibres, e.g. aramid (aromatic polyamide) or carbon fibres. In one or more embodiments, the thermoplastic is a laminate structure comprising woven reinforcement layer(s).

In one or more embodiments, the thermoplastic material may be shaped to form the roof rail, e.g. rail profile and/or base profile, by a roll-forming method, such as a roll-forming method applying heat and/or pressure in or prior to shaping of the bends of the roof rail. Portions of thermoplastic composite material may be fixed to each other by a joining method, such as by welding or gluing.

In one or more embodiments, the first sheet material is of a sheet thickness (T1) between 0.2 mm to 1.4 mm, such as between 0.3 mm and 1.2 mm, preferably between 0.4 mm and 1.0 mm.

Such general sheet material thicknesses may allow for desirable design options, and at the same time, provide a cost efficient solution. In one or more embodiments, a design of rail profile walls of thermoplastic composite material or metal, such as steel, e.g. stainless steel profiles may have a wall thickness between 0.2 mm and 1.0 mm such as between 0.3 mm and 0.9 mm, preferably between 0.4 mm and 0.8 mm, which may be made smooth and precise enough e.g. by means of roll forming methods.

The material of the rail profile may in other embodiments of the present disclosure a wall thickness between 0.2 mm and 3 mm such as between 0.3 mm and 1.5 mm. This may e.g. be relevant if the rail profile material is aluminium alloy material or another material softer than stainless steel, but it may also apply for stainless steel profiles or thermoplastic composite profiles. In one or more embodiments, the thermoplastic profiles may have a wall thickness between 1-5 mm, such as between 2-4 mm or such as between 3-4 mm.

In one or more embodiments, it is generally understood that the rail profile and/or the base profile are not extruded or pultruded profiles.

In one or more embodiments, the rail profile is provided by the first sheet material comprising a plurality of bends produced by employing a roll-forming method.

Roll-forming is an efficient technology for forming a sheet material, such as metal sheet material or thermoplastic sheet material, into an elongated profile, such as tube or generally u-shaped profile. Generally, the roll forming process involves gradual deformation of the sheet material, which is fed through a series of the rolls. The roll forming method can be provided as a continuous or semi-continuous process allowing for high efficiency and cost advantages and may be particular suitable for mass production. Additionally the roll forming method may quickly changes to produce different roll-formed results providing a method of high versatility. It may be as simple as engaging or not engaging a roll in the production line.

Roll-forming may involve less tooling cost, e.g. compared to compression moulded processes. Additionally, the roll forming process may allow for higher material utilization and reduction of scrap material, e.g. with scrap factors of down to 3% compared to scrap factors of down to 15% for stamped products.

Advantageously, the roll forming method allows for forming the folded flange walls to a high degree of precision and with the possibility of providing a wide range of first/second angles, e.g. down to 0 degrees, i.e. parallel arranged edge portion and proximal portion.

In one or more embodiments, the initial substantially flat 2-dimensional sheet material is gradually deformed and shaped through a series of rolls, which produces a 3-dimensional shape with longitudinal bends. The sheet material may be the first or second sheet material. In one or more embodiments, a roll forming process provides the first, second, third and/or further bends of the rail profile. In one or more embodiments, all bends of in the first sheet material is performed by roll-forming method.

In one or more embodiments, the roll-forming method employs a minimum of 10 rolls, such as a minimum of 12 rolls, such as a minimum of 15 rolls for making bends in the profile(s). For the base profile, a minimum of 8 rolls, such as a minimum of 10 rolls may be used. For the rail profile a minimum of 10, such as a minimum of 15 or preferably a minimum of 20 rolls is used. The application of such a large number of rolls makes it easier to provide the intricate design features of the profiles, such as the flange walls. In one or more embodiments, the bends of the rail profiles are provided by between 10 and 40 rolls, such as between 15 and 35 rolls, or such as between 20 and 30 rolls.

In one or more embodiments, the roof rail is of the type being an integrated rail. This generally means that the roof rail is installed so as to appear to be in contact with the roof of the vehicle along substantially entire longitudinal extent of the roof rail. The elongated rail profile may be arranged along the longitudinal direction of the car, provided from the front of the car to the back of the car.

In one or more embodiments, the roof rail comprises a curved longitudinal centre-axis, which may be provided by bending the rail profile, e.g. at each end thereof, towards the bottom side of the rail profile. The bottom side generally comprises the mounting part, or base profile and/or the bottom of the folded flange walls. This may provide advantages to the aerodynamic properties of the roof rail and further increase its aesthetic appearance.

The curved shape preferably provides a generally open roof rail ends directed towards the roof of the vehicle. The openings of the open ends may preferably be arranged in parallel with the opposing part of the roof of the vehicle, when the roof rail is installed thereon. The longitudinal bending of the roof rail may be provided by any mechanical shaping methods, such as a stretch-bending or a roll-forming method and preferably a subsequent cutting process. The cutting process may produce a longitudinal extent of the flange wall and/or mounting part (and optionally the base part) which is shorter than the maximum longitudinal extent of the cover part. The edges at the open ends of the roof rail may be rounded by grinding and/or polished.

In one or more embodiments, filler part may optionally be provided in the rail profile cavity at the open ends thereof, so as to support the roof rail and decrease the risk of deformation of the shape of the rail profile at ends thereof. The filler part may be arranged between the mounting part and the cover part along the longitudinal direction of the roof rail, e.g. such that it extends over the open end of the roof rail facing the vehicle roof, i.e. the mounting part (and the optional base profile) may be shorter in longitudinal extent than the cover part.

In one or more embodiments, the elongated rail profile is configured to be mounted on a roof, e.g. by fastening means provided through the roof. The fastening means may comprise stud bolts and/or screws and/or threaded rings, e.g. with O-ring seals and/or dust-protection, which may be pre-mounted in position through mounting apertures in the roof rail. In one or more embodiments, support brackets may additionally be provided in the interior space of the roof rail, e.g. in positions configured for attachment of a load, so as to increase the strength of the roof rail.

In one or more embodiments, the folded flange wall may be provided with coinciding apertures in a neighbouring proximal portion and edge portion at side(s) of the rail profile, for securing loads to the roof rail. Additionally or alternatively, the cover part of the roof rail may be shaped with one or more retainer bends, provided by forming one or more protrusions by one or more bends, so that load may be retained by fixing against the retainer surfaces.

The second aspect of the invention relates to an elongated rail profile made of a first sheet material comprising a plurality of bends,
wherein the first sheet material provides a cover part for providing an outermost surface of the roof rail during use, and a mounting part for mounting the rail profile to the vehicle, wherein the mounting part is positioned between sides of the cover part,
wherein a first flange wall of the rail profile is provided by a first edge portion of the cover part and a first proximal portion of the mounting part, which are connected, so that an inner surface of the first proximal portion is arranged at a first angle from an inner surface of the first edge portion of the cover part,
wherein a second flange wall of the rail profile is provided by a second edge portion of the cover part, arranged opposite the first edge portion, and a second proximal portion of the mounting part, which are connected, so that an inner surface of the second proximal portion is arranged at a second angle from the an inner surface of the second side portion of the cover part,
wherein the first flange wall or the second flange wall or both is/are folded flange wall(s), wherein the folded flange wall is provided by one or bends in the first sheet material arranged between a proximal portion and an edge portion, and
wherein the mounting part further comprises one or more distal portion(s) configured to provide contact surface(s) for mounting the rail profile to the roof of the vehicle, wherein the distal portion(s) are attached to the proximal portions and arranged at a mounting distance of at least 1 mm, such as at least 2 mm, preferably at least 3 mm above a first plane comprising lowermost parts of the first and second flange walls.

The rail profile according to the second aspect may comprises any of the features and benefits according to any embodiment(s) of the first aspect of the invention.

The third aspect of the present invention further relates to a method of providing rail profile according to the first aspect, wherein the method comprises the step of preforming a roll-forming process on a first sheet material in order to form the rail profile, wherein the roll-forming process involves the application of one or more roll(s) in providing a plurality of bends in the first sheet material.

### DRAWING

Aspects of the present disclosure will be described in the following with reference to the figures in which:
- Fig. 1a: shows a transverse cross-section of a roof rail according to a first embodiment of the invention,
- Fig. 1b: shows a transverse cross-section of a roof rail according to a second embodiment of the invention,
- Fig. 1c: shows a transverse cross-section of a roof rail according to a third embodiment of the invention,
- Fig. 1d: shows a transverse cross-section of a roof rail according to a fourth embodiment of the invention,
- Fig. 1e: shows a transverse cross-section of a roof rail according to a fifth embodiment of the invention,
- Fig. 1f: shows a transverse cross-section of a roof rail according to a sixth embodiment of the invention,
- Fig. 1g: shows the roof rail according to the first embodiment as seen in perspective,
- Fig. 2a: shows a transverse cross-section of a roof rail according to a seventh embodiment of the invention,
- Fig. 2b: shows a roof rail according to an eighth embodiment of the invention, seen in perspective,
- Fig. 2c: shows a roof rail according to a ninth embodiment of the invention, seen in perspective,
- Fig. 3a: shows a roof rail according to a tenth embodiment as seen in perspective,
- Fig. 3b: shows the roof rail according to the tenth embodiment as seen in perspective,
- Fig. 4a: shows a roof rail with fastening means according to an eleventh embodiment of the invention, as seen in perspective,
- Fig. 4b: shows a cross-sectional view of the roof rail according to the eleventh embodiment.

### DETAILED DESCRIPTION OF THE INVENTION

In relation to the figures described below, where the present disclosure may be described with reference to various embodiments, without limiting the same, it is to be understood that the disclosed embodiments are merely illustrative of the present disclosure that may be embodied in various and alternative forms. The figures may not be to scale; some features may be exaggerated or minimized to show details of particular components. Therefore, specific structural and functional details disclosed herein are not to be interpreted as limiting, but merely as a representative basis for e.g. teaching one skilled in the art to variously employ the present disclosure.

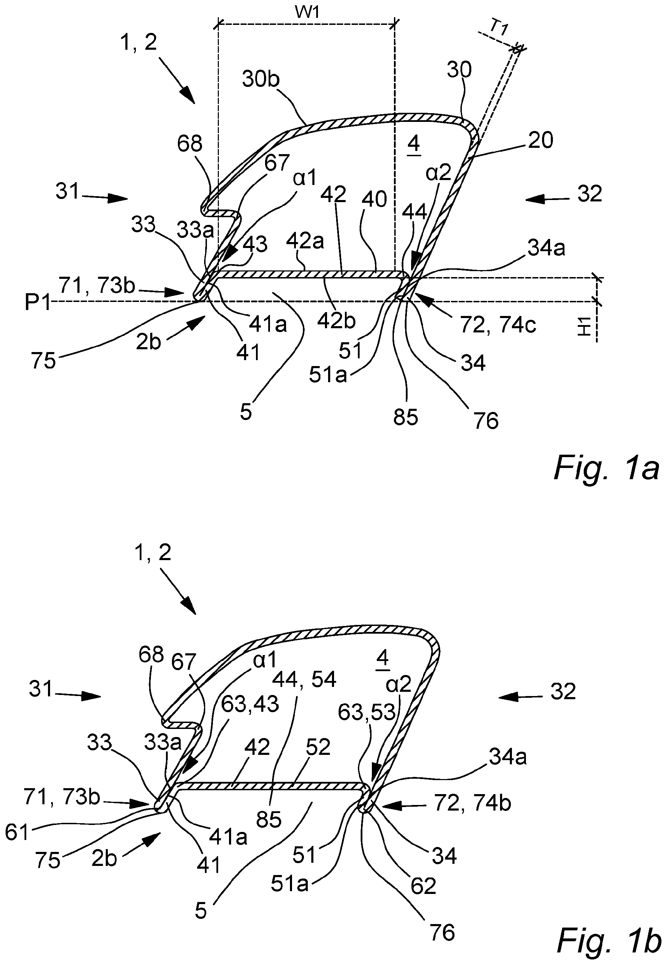

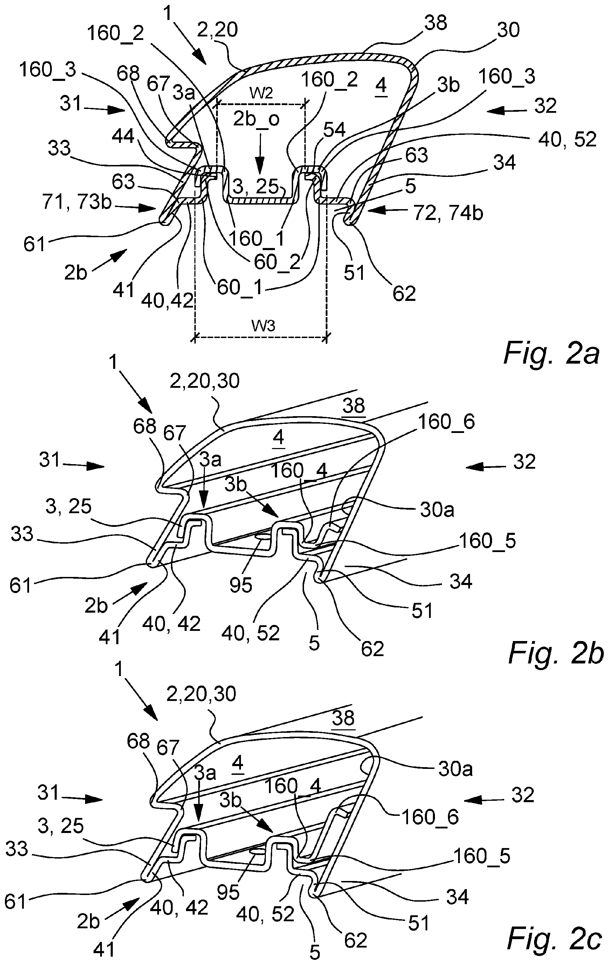

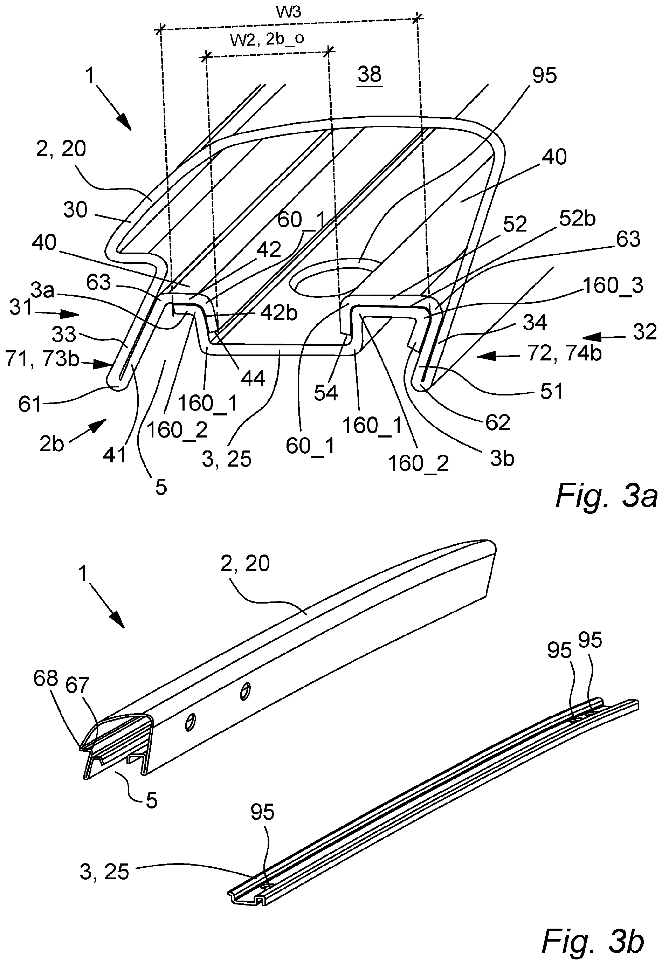

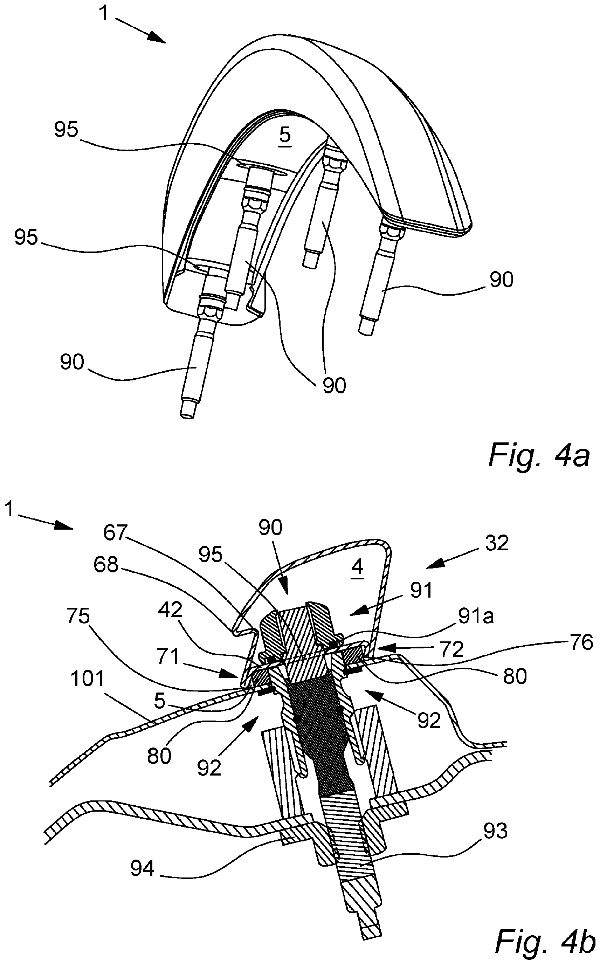

A first group of figures containing Figs. 1a-1f, 4a-4b, a second group of figures containing Figs. 2a-2c and a third group of figures containing Figs. 3a-3b generally shows three different types of roof rails 1 according to the invention. Common for all embodiments, and as seen for example in the transverse cross-sectional view Fig. 1a, is that the roof rail 1 comprises a rail profile 2 made of a first sheet material 20, which is preferably formed by a roll forming method so as to provide a cover part 30 and a mounting part 40. The cover part is arranged to provide the outer visible surface of the roof rail 30b, which may be polished coated or otherwise made decorative. A bottom side of the rail profile 2b is arranged to be facing the vehicle when installed. The mounting part 40 is arranged to provide a strong connection between the roof of the vehicle and the roof rail 1.

Between the cover part 30 and the mounting part 40, e.g. at each side of the cover part 31, 32, the rail profile 2 comprises a flange wall 71, 72 made by an edge portion 33, 34 and a neighbouring proximal portion 41, 51, and providing a first angle α1 between inner surfaces of the neighbouring first edge portion 33a and first proximal portion 41a and a second angle α2 between inner surfaces of the neighbouring second edge portion 34a and second proximal portion 51a. In one or more examples, the first angle α1 and second angle α2 are preferably both sharp angles, e.g. between 0 degrees and 80 degrees, or such as between 0-50 degrees for the first angle α1 and between 0-85 degrees for the second angle α2, so that the proximal portion 41, 51 extents upwards and inwards into the interior space 4 covered by the cover part 30. In Figs. 1a-c, 2a-c, 3a-b and 4a-b the first and second angle is approximately 0 degrees, such as between 0 and 10 degrees or between 0 and 5 degrees. An extent of the edge portion(s) and an extent of a proximal portion being proximal to the same first angle α1 and/or second angle α2 are preferably substantially planar.

The roof rail 1 further comprises a distal portion 42, wherein the distal portion 42 is arranged to provide a contact surface as a mounting platform for fixing the rail profile 2 to the roof of the vehicle. The contact surface may comprise an inner surface of the distal portion 42a and/or outer surface of the distal portion 42b. Due to the first angle α1 and second angle α2, a mounting space 5 is provided and the distal portion 42 can be arranged with a minimum distance (H1) from the roof of the vehicle when installed, wherein the minimum distance (H1) is measured between a first plane P1 comprising the lowermost parts of the flange walls 75, 76 and an outer surface of the distal portion 42b, see e.g. Fig. 1a.

Additionally, by the flange wall 71, 72, the roof rail 1 is arranged so that upon fixing the rail profile 2 to the roof of the vehicle by applying a fixation force to the contact surface 42a, 42b towards the vehicle roof, the roof rail 2, e.g. in particularly in the cover part 30, may become pre-stressed increasing the strength of the roof rail 1.

The above-mentioned features described in relation to the example of Fig. 1a are common features, which are also present in the examples of Figs. 1b-g 2a-2c, 3a-3b and 4a-4b. The elements described above in relation to Fig. 1a can generally be identified by the same or similar shape and/or relative location in the remaining figures. In the following each example will be described in more detail and the differing features between the different examples of the roof rail 1 according to the invention will become clear.

In Figs. 1a-1f, the roof rail 1 encloses an interior space 4 by connecting longitudinal ends of the first sheet material e.g. by a joint, e.g. welded connection 85, preferably at a bottom side of the rail profile 2b.

In Fig. 1a-1c, a first flange wall 71 is a first flush folded flange wall 73b made by a first edge portion of the cover part 33 and a first proximal portion of the mounting part 41, which have been arranged substantially in parallel and extending from a first lowermost part of the first flange wall 75. At a first side of the cover part 31, a first edge portion 33 is contiguous with a first proximal portion 41 at the first lowermost part of a first flange wall 75.

In Fig. 1a a first distal portion 42 is extending from the first proximal portion 41 at a first end of the first distal portion 43 towards the opposite second side of the cover part 32, where the first distal portion 42 is connected to a second proximal portion 51 at a second end of the first distal portion 44. The second proximal portion 51 is joined together with a second edge portion of the cover part 34, which joint provides a second flange wall 72 being a joined flange wall 74c. The second proximal portion 51 and the second edge portion 34 are arranged in abutting arrangement and preferably joined together. Preferably, an inner surface of the second edge portion 34a and an inner surface of the second proximal portion 51a are joined together by a glued or welded connection 85. Alternatively, the first flange wall 71 may be a joined flange wall, e.g. by welding or gluing, and the second flange wall 72 may be a flush folded flange wall.

In Figs. 1b-1d, the rail profile 2 comprises a first distal portion 42 extending from the first proximal portion 41 at a first end of the first distal portion 43 towards the second side of the cover part 32, and a second distal portion 52 is extending from the second proximal portion 51 at a first end of the second distal portion 53 towards the first side of the cover part 31. The first and second distal portions 42, 52 are joined at second ends 44, 54 thereof, preferably by a joint, e.g. welded connection 85. The extents of the distal portions may be substantially equal or different, and the connection may be provided in the middle of the bottom side of the rail profile 2b or closer to the first side of the cover part 31 or closer to the second side of the cover part 32. In Figs. 1b-1c, the second proximal portion 51 provides a second flange wall 72 comprising a second flush folded flange wall 74b together with a second edge portion of the cover part 34 by being contiguously arranged with the second edge portion of the cover part 34. The second proximal portion 51 and the second edge portion 34 are arranged substantially in parallel and extending on opposite sides of a second lowermost part of the second flange wall 76.

In Figs. 1a-1c, the first angle α1 between the inner surface of the first edge portion 33a and the inner surface of the first proximal portion 41a is between 0°-10°. Preferably, the second angle α2 between the inner surface of the second edge portion 34a and the inner surface of the second proximal portion 51a is also between 0°-10°. In one or more embodiments, the first angle α1 and second angle α2 may be substantially identical or different.

In one or more embodiments, the transverse cross-section of the elongated rail profile 2 comprises a plurality of bends made in the first sheet material 20. The first angle α1 may be provided by a joined connection or by a first bend 61 provided between contiguously arranged first proximal portion 41 and first edge portion 33, and/or the second angle α2 may be provided by a joined connected or by second bend 62 between contiguously arranged second proximal portion 51 and second edge portion 34. An example of a rail profile 2 comprising both a first and second bend 61, 62 is for example shown in Figs. 1b-1d, 2a-2c, and 3a. A line between inner and outer surfaces of the folded flange wall at the lowermost part of folded flange walls may define the interface between the neighbouring edge portion and proximal portion.

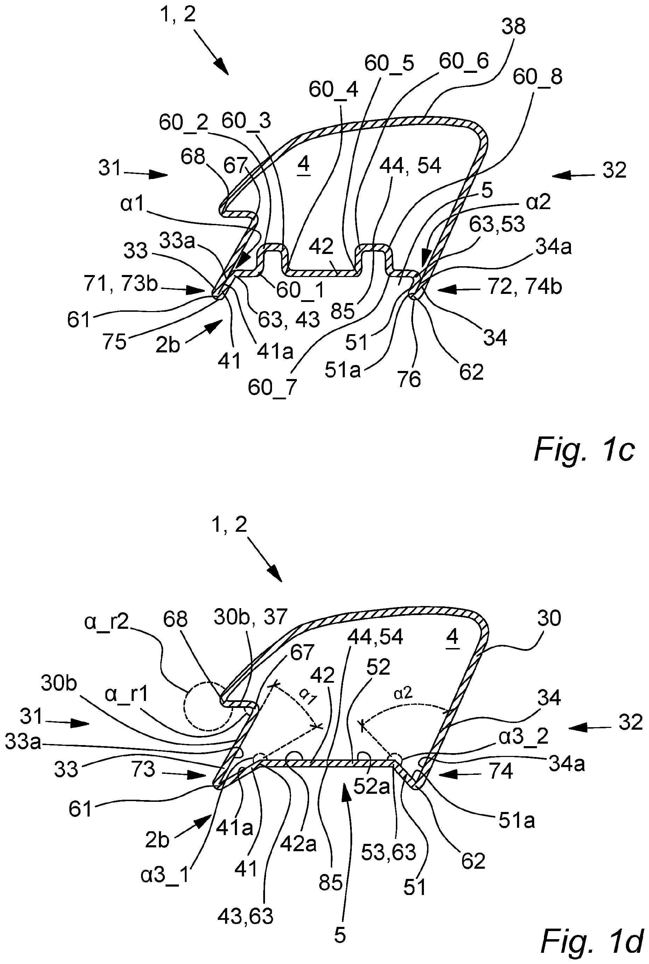

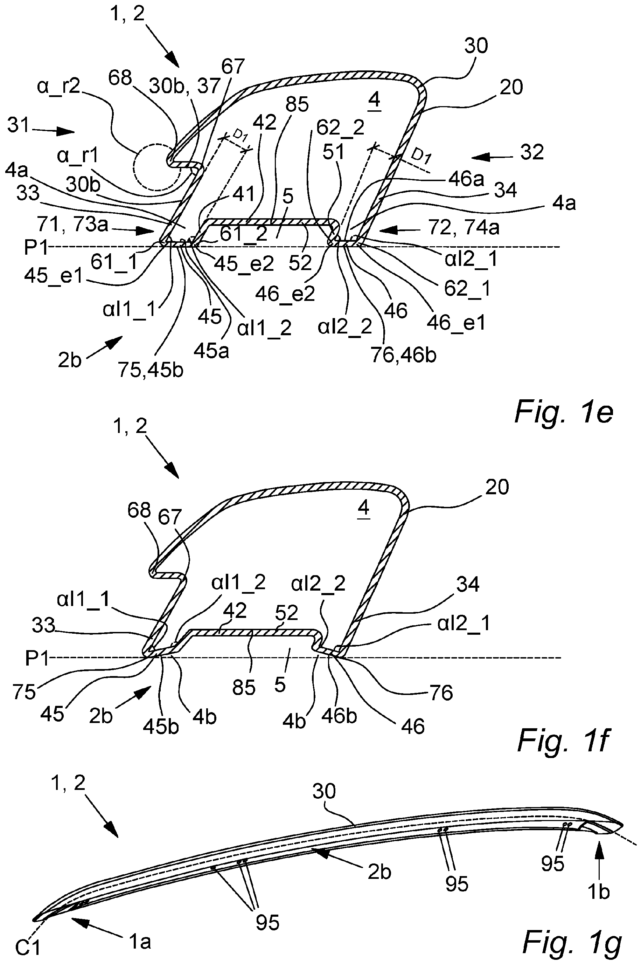

The rail profiles may further comprises a third bend 63 at an interface between a proximal portion 41, 51 and a distal portion 42, 52, see e.g. Fig. 1b-d. The bend may be provided at a third angle α3_1, α3_2, which is preferably an obtuse angle measured between inner surfaces of the proximal portion 41a, 51a and the adjacent distal portion 42a, 52a, see Fig. 1d, e.g. so that a dominant orientation of the distal portion(s) may optionally be substantially aligned along the roof of the vehicle, when installed thereon.

In Fig. 1c, a first distal portion 42 and a second distal portion 52 each comprises one or more further bends 60_1..60_8 collectively providing two inward protrusions along the collective extent of the distal portions. Alternatively, either the first distal portion 42 or the second distal portion 52 comprises the further bends 60_1..60_8 providing one or more inward protrusions along the connective extent of the distal portion(s) 42, 52.

Fig. 1c shows an example of how two protrusions may be made in the distal portion(s) 42, 52 of the roof rail 1. The first distal portion 42 is initially extending substantially horizontally from the third bend 63 connecting the first distal portion to the first proximal portion 41, towards the second side of the cover part 32. The one or more further bends comprises a first further bend 60_1 directing the first distal portion 42 inwards towards the interior space of the rail profile 4 and into an optional substantially vertical orientation, followed by a second further bend 60_2 of the one or more bends directing the first distal portion 42 towards the second side of the cover part 32 and into an optionally substantially horizontal orientation, followed by a third further bend 60_3 directing the first distal portion 42 downwards and into an optionally substantially vertical orientation, followed by a fourth further bend 60_4 directing the first distal portion 42 towards the second side of the cover part 32 and into an optionally substantially horizontal orientation, followed by an fifth further bend 60_5 directing the first distal portion 42 upwards towards the interior space 4 and into an optionally substantially vertical orientation, lastly followed by a sixth further bend 60_6 of the one or more bends directing the first distal portion 42 towards the second side of the cover part 32 and into an optionally substantially horizontal orientation. The second distal portion 52 is initially extending substantially horizontally from the second proximal portion 51 towards the first side of the cover part 31. The rail profile comprises a further third bend 63 connecting the second distal portion 52 to the second proximal portion 51 and directing the second distal portion 52 inwards towards the interior space of the rail profile 4 and towards the opposite first side of the cover part 31, followed by a seventh further bend 60_7 directing the second distal portion 52 towards the top of the cover part 38 and into an majorly substantially vertical orientation and followed by an eight further bend 60_8 directing the second distal portion 52 towards the first side 31 and to the first distal portion 42. The connection may be made by a joint, e.g. glued or welded connection 85. The joint connection, e.g. welded connection 85 may be placed elsewhere along the mounting part, e.g. the one or more further bends 60_1..60_8 may be distributed differently between the first and second distal portions 42, 52 or they may all be provided in one distal portion 42, 52.

Fig. 1d shows a roof rail 1 including a rail profile 2 comprises folded flange walls 73, 74 made by an edge portion 33, 34 and a neighbouring proximal portion 41, 51, and providing a first angle α1 between inner surfaces of the neighbouring first edge portion 33a and first proximal portion 41a and a second angle α2 between inner surfaces of the neighbouring second edge portion 34a and second proximal portion 51a. The first angle α1 and second angle α2 are preferably both sharp angles provided at an first angle α1 between 30 and 45 degrees and a second angle α2 between 55-75 degrees, so that the proximal portion 41, 51 extents upwards and inwards into the space covered by the cover part 30. An extent of the edge portion(s) 33, 34 and an extent of a proximal portion 41, 51 being proximal to the same first angle α1 and/or second angle α2 are preferably substantially planar. In one or more further examples, one of the first or second angles a1, α2 may be provided at an angle above 30 degrees but below 75 degrees, while the other angle of the first and second angles α1, α2 may be provided at an angle below 30 degrees, such as between 0-10 degrees.

In Fig. 1e, the rail profile 2 comprises a first flange wall 71 and a second flange wall 72, and each flange wall 71, 72 comprises an intermediate portion 45, 46, of an intermediate distance D1 at each side of the cover 31, 32, which results in a first and second open folded flange 73a, 74a. A first intermediate portion 45 is connected at a first end thereof 45_e1 to the first cover portion 33 by first intermediate bend 61_1 in the sheet material 20 and is further connected at second end thereof 45_e2 to the first proximal portion 41 by a second intermediate bend 61_2 in the sheet material 20. A second intermediate portion 46 is connected at a first end thereof 46_e1 to the second cover portion 34 by first intermediate bend 62_1 in the sheet material 20 and is further connected at second end thereof 46_e2 to the second proximal portion 51 by a second intermediate bend 62_2 in the sheet material 20. A first distal portion 42 is extending from the first proximal portion 41 towards the second proximal portion 51 and a second distal portion 52 is extending from the second proximal portion 51 towards the first proximal portion 41 and are connected by a joint e.g. welded connection 85.

In Figs. 1e, the first and second intermediate bend 61_1, 61_2, 62_1, 62_2 are preferably provided at first and second intermediate angles αI1_1, αI1_2, αI2_1, αI2_2, which when added together provides a result between 160-200°, e.g. at a sum (αI1_1 + αI1_2 or αI2_1 + αI2_2) substantially equal to 180° the proximal portion extending form the second intermediate bend 45_e2, 46_e2 is parallel to the edge portion extending from the first intermediate bend 45_1, 46_e2, e.g. as seen in Fig. 1e. In one or more examples, at a sum of the first and second intermediate angles of a flange wall 71, 72 of approximately 180°, the first and second angles between the proximal portion 41, 51 and the edge portion 33, 34 of the flange wall 71, 72 is consequently approximately 0°. The sum of intermediate angles (αI1_1 + αI1_2 or αI2_1 + αI2_2) at a first flange wall 71 may be different to the sum of intermediate angles (αI1_1 + αI1_2 or αI2_1 + αI2_2) at a second flange wall 72 or they may substantially correspond to each other.

The outer surface of the intermediate portions 45b, 46b are arranged to be directed towards the vehicle roof when the roof rail is installed while the inner surfaces of the intermediate portions 45a, 46a are directed towards the interior space 4 and may aid in enclosing the space 4. An intermediate upper space 4a provided between inner surfaces of the edge portion and the proximal portion of an open folded flange wall 73a, 74a may accommodate fastening means (not shown) and aid in securely fastening the rail profile 2 of the roof rail 1 to a vehicle and/or it may accommodate support elements (not shown) for supporting the sides of the cover part 31, 32.

The intermediate portions 45, 46 may be arranged extending in the first plane P1 comprising the lowermost parts of the flange walls 75, 76, as seen in Fig. 1e. E.g. substantially parallel with the vehicle roof portion, which the intermediate portions are to be facing upon installation.

In Fig. 1f, the roof rail 1 including a rail profile 2 only differs from the example shown in Fig. 1e in that the intermediate angles αI1_1, αI1_2, αI2_1, αI2_2 in the first sheet material 20 are of a slightly different value providing an extent of the intermediate portions 45, 46 being non-parallel with the first plane P1 comprising the lowermost parts 75, 76 of the open folded flange walls. The orientation of the intermediate portions 45, 46 creates lower intermediate space 4b, e.g. tapered space, provided in between the first plane P1 and the outer surface of the intermediate portion 45b, 46b, wherein the space is increasing in size from the edge portion 33, 34 towards the distal portion 42, 52. The lower intermediate space 4b may be utilized for fastening and/or sealing purposes.

Fig. 1g shows a roof rail 1 of Fig. 1a as seen in perspective, illustrating the longitudinal extent of the roof rail 1 with a first open end 1a and an oppositely arranged second open end of the roof rail 1b. The roof rail 1 is curved, so that the cover part 30 are to extend towards the roof and open ends 1a, 1b, and the bottom side of the rail profile 2b, are to be facing a roof of a vehicle upon installation of the rail profile 1. The roof rail 1 is further seen comprising a plurality of mounting apertures 95 for allowing fastening of the roof rail 1 to a roof of a vehicle. The mounting apertures 95 are provided in the mounting part of the rail profile 2. As can be seen in Fig. 1g, the roof rail 1 has a curved longitudinal centreline C1, extending through the centre of transverse cross-sections thereof.

The roof rails 1 of Figs. 2a-2c comprises a rail profile 2 and further comprises a base profile 3 made of a second sheet material 25, which may also be formed by a roll forming method or any other suitable method. The base profile 3 is of a width W3 being larger than the width of a bottom opening W2 provided in the bottom side of the rail profile 2b, as shown in Fig. 2a. The bottom opening 2b_o is provided by a spacing existing between a second end of a first distal portion 44 and a second end of a second distal portion 54, as indicated in Fig. 2a.

In the present examples, and as indicated in Fig. 2a, the first and second flange walls 71, 72 are flush folded flange walls 73b, 74b, where the edge portion 33, 34 is contiguous with the adjacent proximal portion 41, 51 in each folded flange wall 73b, 74b. Alternatively, one or both flange walls 71, 72 may be of a different type, e.g. joined or open folded flange wall.

As seen in Fig. 2a, third bends 63 are provided between the proximal portion 41, 51 and the adjacent distal portion 42, 52 of the mounting part 40, arranging the distal portion towards the opposing side of the cover part 31, 32 e.g. along a majorly horizontal orientation. Both the first and second distal portions 42, 52 comprises further bends, including a first further bend 60_1 changing the orientation of the distal portion 42, 52 from being directed towards the opposing side of the cover part to instead being directed towards the top of the cover part 38, e.g. along a majorly vertical direction. The further bends further includes a second further bend 60_2 following the first further bend 60_1, which directs the distal portion 42, 52 towards the opposing side of the cover part 31, 32, preferably along a majorly horizontal orientation. The further bends may thereby provide an advantageous contact surface for attachment and retaining fastening elements, e.g. even without a base profile 3, for mounting the rail profile 2.

The base profile 3 of Figs. 2a-2c is preferably formed with one or more base profile bends configured to provide a base profile shape which corresponds to at least a part of the shape of the first and second distal portions 42, 52. Figs. 2a shows how the base profile 3 comprises bends 160_1, 160_2, 160_3 at each side the longitudinal centre thereof, which may be bent at angles so as to arrange the base profile in substantially flush arrangement with at least a part of the distal portions 42, 52, e.g. at the first and second further bends 60_1, 60_2. The base profile 3 comprises a first side 3a arranged to be placed at the first distal portion 42 and a second side 3b arranged to be placed at the second distal portion 52. The initially flat and elongated sheet material 25 may at both the first and second side comprise three bends; a first base profile bend 160_1 extending along the longitudinal extent of the base profile and directing the sheet material 25 upwards in a transverse cross-section thereof, a second base profile bend 160_2 extending along the longitudinal extent of the base profile and directing the sheet material 25 sideways in a transverse cross-section thereof, a third base profile bend 160_3 extending along the longitudinal extent of the base profile and directing the sheet material 25 downwards in a transverse cross-section thereof, so as to create a cross-sectional shape as shown e.g. in Fig. 2a. The specified upward, downward and sideway direction are relative to the base profile orientation as shown in Fig. 2a-2c, which orientation is expected to be the general orientation of the rail profile 1 when installed on a roof of a vehicle.

In Figs. 2a-2c, the shape of the rail profile 2, to which the base profile 3 is to be connected, may be of a slightly tilted shape, i.e. with the first side of the cover part 31 tilted towards the second side 32 and the second side of the cover part 32 tilted away from the first side 31. The rail profile 2 may have other cross-sectional shapes, and may e.g. be symmetrical about a vertical plane extending through the centre of the roof rail 1 or it may be tilted towards the opposite direction. With the tilted shape In Fig. 2a, there exist a larger gap between the second side of the cover part 32 and the second side of the base profile 3b, than between the first side of the cover part 31 and the first side of the base profile 3a. This gap may be utilized for placing fastening means, support elements or other components for a roof rail.

However, the base profile may also advantageously be shaped so as to add structural support to one or more sides of the cover part 31, 32, such as the second side of the cover part 32, e.g. as seen in Fig. 2a and 2b, in a simple and easy manner without the need of adding additional elements to the inside of the rail profile 1. Fig. 2b and Fig. 2c shows a perspective view of a rail profile 1 of the invention, which has been cut through so that a cross-section thereof is shown. The roof rails 1 of Fig. 2b and 2c comprises the features shown in embodiment of Fig. 2a but differs from the embodiments of Fig. 2a in that the base profile comprises further bends. The base profiles 3 of Figs. 2b and 2c further comprise further base profile bends 160_4, 160_5, 160_6 at one side of the base profile 3b; a fourth base profile bend 160_4 extending along the longitudinal extent of the base profile and directing the sheet material 25 sideways in a transverse cross-section thereof, a fifth base profile bend 160_5 extending along the longitudinal extent of the base profile and directing the sheet material 25 upwards in a transverse cross-section thereof, a sixth base profile bend 160_6 extending along the longitudinal extent of the base profile and directing the sheet material 25 slightly downwards, however mostly sideways towards the inner surface of the cover part 30a in a transverse cross-section thereof. In Fig. 2c the base profile extent between the fifth bend 160_5 and sixth bend 160_6 is longer than in Fig. 2b, in order to create support to the cover part 30 further towards the top of the rail profile 38. In Figs. 2a-2c the first side of the cover part 31 may be supported by the collaborative presence of the first side of the base profile 3a and the first distal portion 42.

The roof rails 1 may further comprise mounting apertures 95, as seen in Figs. 2b-2c. The roof rail 1 may be mounting on a roof of a vehicle by fastenings means, such as stud bolts, extending through mounting apertures 95, with a head of the stud bolt being retained by the distal portions 42, 52 of the mounting part 40 via the base profile 3. The roof rail 1 thereby can provide a pre-stressing of the rail profile 2 when be subjected to a fixation force towards the roof of the vehicle, e.g. by using the described fastening means.

In Figs. 2a-2c, the roof rail 1 encloses an interior space 4 by assembling the rail profile 2 with the base profile 3 at a bottom side of the rail profile 2b.

Figs. 3a-3b shows an example of a third type of roof rail 1 according to the present disclosure. Fig. 3a shows a roof rail 1, which has been cut through so as to show a transverse cross-section thereof, and Fig. 3b shows the entire cut-out roof rail of Fig. 3a with the base profile 3 and the rail profile 2 separated. The roof rails 1 of Figs. 3a-3b comprises a base profile 3 made of a second sheet material 25, which may be formed by a roll forming method or any other suitable method. The rail profile 2 is made of a first sheet material 20, which preferably also has been roll formed into the shown shape. The base profile 3 is of a width W3 being larger than the width of a bottom opening W2 provided in the rail profile 2, as shown in Fig. 3a. The bottom opening 2b_o is provided by the smallest spacing between the first and second distal portions 42, 52, e.g. a spacing existing between a second end of a first distal portion 44 and a second end of a second distal portion 54, as indicated in Fig. 3a.

In the present example of Fig. 3a, the first and second flange walls 71, 72 are flush folded flange walls 73b, 74b, where the edge portion 33, 34 is contiguous with the adjacent proximal portion 41, 51 in each folded flange wall 73b, 74b. Alternatively, one or both flange walls 71, 72 may be of a different type, e.g. joined or open folded flange wall.

In Fig. 3a, third bends 63 are provided between the proximal portion 41, 51 and the adjacent distal portion 42, 52, arranging the distal portion towards the opposing side of the cover part 31, 32 e.g. along a majorly horizontal orientation. Both the first and second distal portions 42, 52 comprises a further bend 60_1 in each distal portion 42, 52 changing the orientation of the distal portions 42, 52 from being directed towards the opposing side of the cover part to instead generally being directed away from of the cover part 38, e.g. along a majorly vertical direction. The distal portions 42, 52 extends a distance from the first further bend 60_1 but then terminates in a second end of the first distal portion 44 and a second end of the second distal portion 54. The extent of the second distal portion 52 between the third bend 63 and the further bend 60_1 thereof is longer than the extent of the first distal portion 42 between the third bend 63 and the first further bend 60_1 thereof, thereby placing a bottom opening 2b_o approximately centred about the centre of the bottom of the rail profile 2b. The first further bend 60_1 and the third bend 63 may collectively provide a cavity and an advantageous contact surface for attachment and retaining fastening elements for mounting the rail profile 2.

The base profile 3 of Figs. 3a-3b is preferably formed with one or more base profile bends. The bends may be configured to provide a base profile shape, which corresponds to at least a part of the shape of the first and second distal portions 42, 52 provided by the outer surfaces of the distal portions 42b, 52b, see Fig. 3a. Fig. 3a shows how the base profile 3 comprises bends 160_1, 160_2 at a first side of the base profile 3a and bends 160_1, 160_2, 160_3 at a second side of the base profile 3b. The bends 160_1, 160_2 are provides so that the base profile 3 can be arranged in substantially flush arrangement with at least a part of the outer surfaces of the distal portions 42b, 52b, at least at the first further bend 60_1. The base profile 3 comprises a first side 3a arranged to be placed at the first distal portion 42 and a second side 3b arranged to be placed at the second distal portion 52. The initially flat and elongated sheet material 25 may at both the first and second side comprise two bends; a first base profile bend 160_1 extending along the longitudinal extent of the base profile and directing the sheet material 25 upwards in a transverse cross-section thereof and a second base profile bend 160_2 extending along the longitudinal extent of the base profile and directing the sheet material 25 sideways in a transverse cross-section thereof. The second side of the base profile 3b further comprises a third base profile bend 160_3 extending along the longitudinal extent of the base profile and directing the sheet material 25 downwards in a transverse cross-section thereof, so as to create a cross-sectional shape as shown e.g. in Fig. 3a. The specified upward, downward and sideway direction are relative to the base profile orientation as shown in Fig. 3a-3b, which orientation is expected to be the general orientation of the rail profile 1 when installed on a roof of a vehicle.

As seen in Figs. 3a-3b, the roof rail 1 may further comprise mounting apertures 95. A seen in Fig. 3a, the roof rail 1 may be mounting on a roof of a vehicle by fastenings means, such as stud bolts, extending through mounting apertures 95, with a head of the stud bolt being retained by the distal portions 42, 52, which are supported at an outer surface thereof 42b, 52b by the base profile 3. The base profile 3 may add stability to the rail profile, as the base profile is configured to maintain the width of the bottom opening of the rail profile 2b. It may further add structural strength and stability to the mounting part 40. The roof rail 1 can provide a pre-stressing of the rail profile 2 when be subjected to a fixation force towards the roof of the vehicle, e.g. by using the described fastening means.

In Figs. 2a-2c and 3a the first distal portion 42 may be contiguous with a first proximal portion 41 which may be contiguous with a first edge portion 33 which may be contiguous with the second edge portion 34, through the cover part 30, the second edge portion 34 may be contiguous with the second proximal portion 51, which may be contiguous with the second distal portion 52. I.e. the cover part 30 and the mounting part 40 may be made from one sheet material 20 and be devoid of joints such as glue or weld lines between the portions.

Fig. 4a shows a perspective view of a roof rail 1 assembled with fastening means 90. The roof rail comprises a rail profile according to Fig. 1. The fastening means 90 are arranged at suitable distance from each other and are extending through mounting apertures 95 of the roof rail 1.

Fig. 4b shows a cross-sectional view of a roof rail 1 according to Fig. 1a, which has been attached to a roof of a vehicle 101. The fastening means 90 are arranged with a head portion 91 applying a fixation force towards the distal portion 42 of the roof rail 1, so that the distal portion 42 is clamped between the head portion 91 and the roof of the vehicle 101, e.g. via a mounting strip 80 and/or a counter portion of the fastening means 92, e.g. a threaded ring. The head portion 91 may further comprise an O-ring seal 91a circling the mounting aperture 95. The fastening means 90 may further be fastened to the roof of the vehicle 101, e.g. by a threaded connection 93 and threaded ring 94. The roof rail may additionally be mounting with support elements, such as support brackets (not shown) inside the interior space 4 if needed, e.g. at the second side of the cover part 32.

The flange walls 71, 72 of the examples of Figs. 1a-1f, 2a-2c, 3a-3b and 4a-4b all provide a mounting space 5 to be utilized for contacting and connecting the roof rail 1 to the roof of a vehicle, e.g. as seen in Fig. 4b. By providing this space 5 enclosed at each end by a flange wall 71, 72, the mounting space 5, and content thereof, may be hidden from the outside and it may appear as if the flange walls 71, 72 touches the roof of the vehicle when viewed from afar. The mounting space 5 may or may not include a lower intermediate space 4b, e.g. as seen in Fig. 1f. In Fig. 4b a mounting strip 80 with holes coinciding with mounting aperture 95 have been provided in the mounting space 5 and is hidden at each side thereof by the flange walls 71, 72. The lowermost parts of the flange walls 75, 76 are extending towards the vehicle roof 101, but are not touching the vehicle roof 101. A small gap exist between the lowermost parts 75, 76 and the vehicle roof.

The mounting strip 80 may be elongated, may comprise one or more filler elements and/or cushioning elements and/or dust protection elements and/or sealing elements and may be made of a rigid or flexible material, such as plastic or rubber. As seen in Fig. 1a, the roof rail 1 provides a mounting space 5 of a width W1, e.g. defined between flange walls 71, 72, which extends below the distal portion(s) 42, 52, allowing a mounting strip to support the mounting part 40 provided between flange walls 71, 72, preferably the entire width of the mounting part 40 transverse to the longitudinal extent of the roof rail. Further, due to the flange walls 71, 72 of the inventions, as described earlier, the mounting space 5 further is of a height H1 for accommodating the mounting strip 80.

The first sheet material 20 and/or the second sheet material 25, may be a stainless steel plate material, e.g. of a uniform sheet thickness T1 between 0.3 mm to 1.1 mm, such as between 0.4 mm and 0.9 mm, preferably between 0.5 mm and 0.8 mm prior to roll forming. Alternatively or additionally, one or both sheet material 20, 25 may be made of a thermoplastic composite material. The sheet thickness of the thermoplastic composite sheet material may be 3-4mm. The sheet thickness T1 is measured between coinciding inner and outer surfaces of the sheet material 20, an example is shown in Fig. 1a.

The shape of the cover part between the first and second angle may be of any shape suitable for accommodating attachment of elements onto the roof rail, such as cross-bars, bicycle racks etc., and/or further may be aesthetic pleasing appearance and/or of aerodynamic advantage.

As seen in Figs. 1a-1f, 2a-2c, 3b and 4b, the rail profile 2 comprises a retainer protrusion provided by first retainer bend 67 and a second retainer bend 68 wherein the first retainer bend 67 is arranged between a first flange wall 71 and the second retainer bend 68. As seen in Figs. 1d-1e, the retainer bend 67 provides a first retainer angle α_r1 and the second retainer bend 68 provides a second retainer angle α_r2, which collectively provide a retainer surface 37 suitable for engaging with attachment means used when attaching elements onto the roof rail 1, e.g. the first retainer angle α_r1 may provide a groove in the cover part 30 and/or a lip for engaging and retaining attachment means, e.g. comprising a clamp mechanism.

The first retainer angle α_r1 may be below 100 degrees, such as below 90 degrees or such as below 80 degrees, measured between the outer surfaces of the cover part 30b on each side of the first retainer angle α_r1. The second retainer angle α_r1 may be above 190 degrees, such as above 250 degrees, or such as above 270 degrees, measured between the outer surfaces of the cover part 30b on each side of the second retainer angle α_r2. The roof rail 1 may in embodiments comprise more than one retainer protrusion, e.g. a retainer protrusion may be provided on each side of the cover part 31, 32.

As seen in Figs. 1d, the rail profile 2 comprises a plurality of bends; a first bend 61 at a first angle α1 between the first edge portion 33 and the first proximal portion 41, followed by a first retainer bend 67 at a first retainer angle α_r1 and a second retainer bend 68 at a second retainer angle α_r2 providing a retainer surface 37 between the retainer bends 67, 68, followed by a second bend 62 at a second angle α2 between the second edge portion 34 and the second proximal portion 51, when viewed along the rail profile 2 from left to right. Between the first angle α1 and the first retainer angle α_r1 a substantially planar extent of the cover part is provided, however alternatively, the extent may also be curved. Between the second retainer angle α_r2 and the second angle α2 the extent of the cover part is preferably gradually curved but may also comprise substantially planar portions.

The shown orientations in the examples are generally the expected orientation of the roof rail when installed on a roof of a vehicle. The bends mentioned herein, are generally elongated bends extending along the longitudinal extent of the roof rail.

The roof rail may comprise further elongated crests/ridges e.g. on the exterior surface not mentioned in the present disclosure.

### REFERENCE LIST

- 1: roof rail
- 1a: first end of roof rail
- 1b: second end of roof rail
- 2: rail profile
- 2a: top side of rail profile
- 2b: bottom side of rail profile
- 2b_o: bottom opening
- 3: base profile
- 3a: first side of the base profile
- 3b: second side of the base profile
- 4: interior space
- 4a: upper intermediate space
- 4b: lower intermediate space
- 5: mounting space
- 20: first sheet material
- 25: second sheet material
- 30: cover part
- 30a: inner surface of the cover part
- 30b: outermost surface of the cover part
- 31: first side of the cover part
- 32: second side of the cover part
- 33: first edge portion
- 33a: inner surface of the first edge portion
- 34: second edge portion
- 34a: inner surface of the second edge portion
- 36: retainer protrusion
- 37: retainer surface
- 38: top of the cover part
- 40: mounting part
- 41: first proximal portion
- 41a: inner surface of the first proximal portion
- 41b: outer surface of the first proximal portion
- 42: first distal portion
- 42a: inner surface of first distal portion
- 42b: outer surface of first distal portion
- 43: first end of the first distal portion
- 44: second end of the first distal portion
- 45: first intermediate portion
- 45_e1: first end of first intermediate portion
- 45_e2: second end of first intermediate portion
- 45a: inner surface of first intermediate portion
- 45b: outer surface of first intermediate portion
- 46: second intermediate portion
- 46_e1: first end of second intermediate portion
- 46_e2: second end of second intermediate portion
- 46a: inner surface of second intermediate portion
- 46b: outer surface of second intermediate portion
- 51: second proximal portion
- 51a: inner surface of the second proximal portion
- 52: second distal portion
- 52a: inner surface of second distal portion
- 52b: outer surface of second distal portion
- 53: first end of the second distal portion
- 54: second end of the second distal portion
- 55: dominant orientation of the distal portion(s)
- 60_1...60_8: mounting part bends
- 61: first bend
- 62: second bend
- 61_1: first intermediate bend of the first bend
- 61_2: second intermediate bend of the first bend
- 62_1: first intermediate bend of the second bend
- 62_2: second intermediate bend of the second bend
- 63: third bend
- 67: first retainer bend
- 68: second retainer bend
- 71: first flange wall
- 72: second flange wall
- 73: first folded flange wall
- 74: second folded flange wall
- 73a: first open folded flange wall
- 73b: first flush folded flange wall
- 74a: second open folded flange wall
- 74b: second flush folded flange wall
- 74c: joined flange wall
- 75: lowermost part of first flange wall
- 76: lowermost part of second flange wall
- 80: mounting strip
- 81: filler part
- 85: welded connection
- 90: fastening means
- 91: head portion
- 91a: O-ring seal
- 92: counter portion
- 93: threaded connection
- 94: threaded ring
- 95: mounting aperture
- 101: roof of a vehicle
- 160_1..160_3: base profile bends

- α1: first angle
- α2: second angle
- α3_1: third angle between first proximal portion and first distal portion
- α3_2: third angle between second proximal portion and second distal portion
- α_r1: first retainer angle
- α_r2: second retainer angle
- αI_1: first intermediate angle
- αI_2: second intermediate angle
- H1: minimum mounting distance of mounting space
- W1: width of mounting space
- W2: width of bottom opening of rail profile
- W3: width of base profile
- D1: intermediate distance
- T1: thickness of first sheet material
- P1: first plane comprising the lowermost parts of the flange walls
- C1: longitudinal centre axis

## Claims

1. A roof rail (1) for a roof of a vehicle (101), comprising:
an elongated rail profile (2) made of a first sheet material (20) comprising a plurality of bends (61, 61_1, 61_2, 62, 62_1, 62_2, 63, 67, 68),
wherein the first sheet material (20) provides a cover part (30) for providing an outermost surface of the roof rail (30b) during use, and a mounting part (40) for mounting the rail profile (2) to the vehicle, wherein the mounting part (40) is positioned between sides of the cover part (31, 32),
wherein a first flange wall (71) of the rail profile (2) is provided by a first edge portion of the cover part (33) and a first proximal portion of the mounting part (41), which are connected, so that an inner surface of the first proximal portion (41a) is arranged at a first angle (α1) from an inner surface of the first edge portion of the cover part (33a),
wherein a second flange wall (72) of the rail profile (2) is provided by a second edge portion of the cover part (34), arranged opposite the first edge portion (33), and a second proximal portion of the mounting part (51), which are connected, so that an inner surface of the second proximal portion (51a) is arranged at a second angle (α2) from the an inner surface of the second side portion of the cover part (34a),
wherein the first flange wall (71) or the second flange wall (72) or both is/are folded flange wall(s) (73, 74), wherein the folded flange wall (73, 74) is provided by one or bends (61, 61_1, 61_2, 62, 62_1, 62_2) in the first sheet material (2) arranged between a proximal portion (41, 51) and an edge portion (33, 34), and
wherein the mounting part (40) further comprises one or more distal portion(s) (42, 52) configured to provide contact surface(s) for mounting the rail profile (2) to the roof of the vehicle (101), wherein the distal portion(s) are attached to the proximal portions (41, 51) and arranged at a mounting distance (H1) of at least 1 mm, such as at least 2 mm, preferably at least 3 mm above a first plane (P1) comprising lowermost parts of the first and second flange walls (75, 76).

2. A roof rail (1) according to claim 1, wherein the first angle (α1) and/or the second angle (α2) is/are a sharp angle.

3. The roof rail (1) according to any of the preceding claims, wherein the one or more distal portion(s) comprises a first distal portion (42) contiguous with the first proximal portion (41) at a first end of the first distal portion (43).

4. The roof rail (1) according to any of the preceding claims, wherein the one or more distal portion(s) further comprises a second distal portion (52) contiguous with the second proximal portion (51) at the first end of the second distal portion (53).

5. The roof rail (1) according to any of the preceding claims, wherein the first proximal portion (41) is contiguous with the first edge portion (33) and/or wherein the second proximal portion (52) is contiguous with the second edge portion (34).

6. The roof rail (1) according to any of the preceding claims, wherein the rail profile (2) provides a fully enclosed interior space (4), e.g. provided by a joined connection.

7. The roof rail (1) according to any of the preceding claims, wherein the folded flange (73, 74) is an open folded flange (73a, 74a) comprising an intermediate portion (45, 46), which at a first end thereof (45a, 46a) is connected to an edge portion (33, 34) via a first intermediate bend (61_1, 62_1) and at a second end thereof (45b, 46b) is connected to proximal portion (41, 51), via a second intermediate bend (61_2, 62_2), such that an intermediate distance (D1) is provided between the edge portion (33, 34) and the proximal portion (41, 51).

8. The roof rail (1) according to any of the preceding claims, wherein the folded flange wall (73, 74) is a flush folded flange wall (73b, 74b) having the inner surface of the proximal portion (41a, 51a) arranged substantially in parallel with the inner surface of the edge portion (33a, 34a).

9. The roof rail (1) according to any of the preceding claims, wherein the mounting part (40) comprises a third bend (63) arranged at an interface between a proximal portion (41, 51) and a distal portion (42, 52), and wherein the third bend (63) is provided at a third angle (α3_1, α3_1) being an obtuse angle measured between the inner surface of the proximal portion (41a, 51a) and an inner surface of the distal portion (42a, 52a).

10. The roof rail (1) according to any of the preceding claims, wherein the roof rail (1) further comprises a base profile (3) made of a second sheet material (25), and wherein the base profile (3) is arranged to extend across a bottom opening (2b_o) extending between distal portions (42, 52) of the mounting part.

11. The roof rail (1) according to any of the preceding claims, wherein the first sheet material (20) is made of metal, such as steel, preferably stainless steel, for example a chromium-nickel stainless steel material.
